# EUROPEAN PATENT APPLICATION

(11) **EP 1 304 043 A1**
(43) Date of publication of application: **23.04.2003**
(21) Application number: 01124302.9
(22) Date of filing: 19.10.2001
(51) Int. Cl.: A23L 1/20, A23L 1/211, A23L 1/238, A23C 11/10, A23K 1/00, A23C 9/13

(54) **Liquefacion of food material**

(71) Applicant: SOCIETE DES PRODUITS NESTLE S.A., 1800 Vevey (CH)
(72) Inventor: Woupeyi, Alfred, 1400 Yverdon (CH); Wood, Robert, 1164 Buchillon (CH); Bodenstab, Stefan, 1775 Mannens-Grandsivaz (CH)
(74) Representative: Wavre, Claude-Alain

(57) **Abstract**

The present invention relates to a process of solid or semi-solid fermentation of food material. The process includes the utilisation of a conical vessel to carry out the fermentation at a high dry matter content. One of the beneficial effects of the process is that fermentation time can be drastically reduced. Thus, it is possible to conduct the fermentation of soy, for example, within less than 16 hours while obtaining a tasty, nutritionally valuable paste based on soy. The invention also relates to the use of conical vessels to conduct fermentation.

## Description

The present invention relates to a method of solid or semi-solid fermentation of food material, a method of reducing the viscosity of food material and a method for enhancing the organoleptic and/or nutritional properties of food material. In addition the present invention relates to the use of conical vessels for conducting fermentation.

### The Background Art

There are numerous raw food materials that are nutritionally extremely valuable. The soy-bean is examplary to illustrate this: it contains up to 48% proteins and 22% oil. Furthermore, a huge range of secondary metabolites, for example isoflavones, micronutrients (folate, zinc, calcium, iron), soluble fibers and prebiotic oligosaccharides are found.

Likewise, grains of cereals, such as rice, and seeds of other plants, for example other legumes, comprise nutritionally valuable ingredients.

Very often, however, the valuable parts of different raw food material, even if cooked, are not easily accessible to a human or animal consumer. This is so because the food can not be sufficiently broken into small units that may be absorbed during digestion, or the food material may comprise other components (for example fibres) that hamper a complete digestion and absorption of valuable components. Especially infants or children, but also patients suffering from a disease, generally exhibit difficulty in accessing a maximum of the nutritionally valuable parts of certain food.

This is one reason why fermentation of food material has been conducted ever since: Enzymes not present in the mammal digestive tract, but in specific micro-organisms, break down components like carbohydrates, proteins and so forth. The fermentation may thus have the consequence that the end product is more readily absorbed in the digestive tract of humans, for example.

Of course, fermentations are also conducted for other purposes, such as the development of specific flavors, the acidification, production of specific metabolites, for example.

Fermentation of food material, such as soy beans, for example, entails a lot of difficulties.

One problem of known processes of soy fermentation is the development of off-flavors. This is often due to the prolonged action of micro-organisms on a food substrate. During the fermentation, proteins are split to bad-tasting parts, undesired metabolites are accumulated, for example.

Another problem is that fermentation processes, especially when soy beans form part of the food base, often take a long time.

Other issues are the problem of contamination. In industrial processes, the food material must be sufficiently freed from undesired micro-organisms prior to a fermentation process.

In general, the literature presents an endless number of processes for fermenting soybeans, for example. Depending on the particular wishes with respect to taste, viscosity and solubility, these processes may vary starkly.

Some of the known fermentation processes of soy, for example if fermentation is carried out with *Rhizopus,* a mould, implicate the release of a high amount of enzymes. This may be due to non-optimal aeration during fermentation, which is usually carried out in a flat tray-like container, or due to the prolonged fermentation time.

With respect to the present invention, it is wished to reduce viscosity and undesired tastes of food material, for example, legumes or cereals, in order to create a food base generally applicable in different kinds of food products. In so doing, the nutritionally beneficial parts are made more available to the consumer, hence the nutritional and organoleptical properties of food material is improved.

Another objective is to ferment food material rapidly and in a more economic, streamlined manner and at the same time prevent contamination and ensure impeccable product safety.

It is a further objective to develop new and unexpected tastes.

The present invention addresses the problems set out above.

### Summary of the Invention

Remarkably, it has been found that a solid or semi-solid fermentation of food material may be conducted in vessels so far not known to be suitable for fermentation. In particular, such fermentation could be successfully conducted in a vessel of a conical mixer and equipped with the mixing instruments of a mixer.

Unexpectedly, it was found that such fermentation could be conducted at a high dry matter content while yielding a food base with an excellent taste and texture properties enabling a broad application in different foods.

Consequently, in a first aspect the present invention provides a method of solid or semi-solid fermentation of food material, which is conducted in a conical vessel.

In a second aspect the invention provides a method of reducing the viscosity of food material, wherein a solid or semi-solid fermentation is conducted in a conical vessel.

In a third aspect the invention provides a method for increasing the organoleptic and/or nutritional properties of food material, wherein a solid or semi-solid fermentation is conducted in a conical vessel.

In a fourth aspect, the present invention provides the use of a conical mixer for conducting fermentation.

Surprisingly, it was found that fermentation could most efficiently be conducted in a conical vessel, for example in a conical mixer.

It is indeed surprising that a fermentation of a food material may be carried out in a reduced time and at a high dry matter content. From the state of the art it is known that fermentation of soy at a high dry matter content (solid or semi-solid) takes 40 hours or more.

An advantage of the present invention is that it provides a surprisingly efficient way of fermenting food material, for example, soy-beans, yielding an added value food base comprising soy.

Another advantage of the present invention is that it generally provides a new and efficient way of conducting fermentation.

Yet another advantage of the present invention is that the filling and emptying of the vessel of fermentation is particularly easy and efficient to perform.

An important advantage of the present invention is that vessels so far only known for mixing of doughs, for example, are particularly suitable to conduct fermentation at a high dry matter content.

It is an advantage that the conical vessel allows a streamlined and safe process, because also cooking, sterilization or pasteurization may be conducted in the same vessel. A streamlined and efficient process of fermentation is allowed for.

### Detailed Description of the Invention

Within the context of this specification the word "comprises" is taken to mean "includes, among other things". It is not intended to be construed as "consists only of'.

Within the context of this specification the term "conical vessel" is used, because the fermentation according to the invention was successfully carried out in a conical mixer. However, the term is also intended to include fermentation vessels that were modelled on mixers, but in fact are no longer mixers, owing to minor changes of a mixer. Such changes include for example changes in size and material, as long as the conical principle is adhered to. For example, a fermentation vessel may be modelled on a mixer, but with a bigger size or a different rotary element or mixing equipment. Such modifications are also intended by the concept of the present invention. Additionally, the characteristic "conical" does not necessarily also apply to the outer shape of the fermentation vessel, but essentially to the inner surface of the vessel.

The word "seeds" is understood to encompass at least all fruits of legumes, for example, peas, beans, such as soybeans, lenses or chickpeas, just to mention a few. However, the term "seeds" is not understood to be restricted to the fruits or seeds of legumes only, but encompasses plant material suitable for processing to food products of other taxa, too.

In an embodiment of the present invention, the food material has a dry matter content of 35 to 75% in percent by weight at the start of the fermentation.

In another embodiment the dry matter content of the material is 40 to 70% in percent by weight at the start and during the fermentation. In a preferred embodiment, the dry matter content is 45 to 65%, more preferably 50 to 60 %.

In a further embodiment, the conical vessel comprises a rotary element.

Preferably, the rotary element of the conical vessel is a mixing screw penetrating into the mixing vessel. More preferably the screw is a rotary screw and/or an orbital screw.

Preferably, the rotary screw of the conical vessel is moved along the inner wall during at least the beginning of the fermentation.

Preferably, the screw of the mixer, when rotating and moving along the inner wall of the conical vessel, conveys the material upwards along the inner wall during the fermentation.

Preferably, the conical vessel comprises a downwardly converging, generally conical inner wall.

In an embodiment of the present invention the conical vessel is a conical orbital mixer.

More preferably, it is a convective random batch mixer.

In a preferred embodiment, the food material according to the method of the present invention comprises material selected form the group comprising cereals, seeds of legumes, potatoes and mixtures thereof.

More preferably, the food material comprises material selected from the group consisting of soy beans, rice, wheat, potatoes and mixtures thereof.

In an even more preferred embodiment, the food material consists of whole or crushed grains or seeds, or grits or groats of the grains or seeds.

Preferably, if soybeans form at least part of the food material, the soybeans are de-hulled and crushed or milled soybeans. For example, the soybeans are in the form of soybean grits. In another example, the soybeans are in the form of soybean flower, semolina, bruised grain, groats or pellets.

In an embodiment, starchy material is added to the soybeans or the material based on soy prior to fermentation. Preferably, the starchy material is based on rice, cereals and/or potatoes.

In still another embodiment of the present invention, the fermentation is conducted with at least one agent selected from the group consisting of micro-organisms, fungi, enzymes and/or mixtures thereof.

Preferably, in an embodiment according to the invention the fermentation is conducted with at least one micro-organism selected from strains of the genus *Lactobacillus, Rhizopus* and combinations thereof.

In a further embodiment according to the method of the present invention, the fermentation is conducted with at least one enzyme selected from the group consisting of protease, hemicellulase, cellulase, α-amylase, α-glucosidase, phytase, galactosidase and combinations thereof.

In a still further embodiment, the fermentation is conducted for 5 to 25 hours at a temperature of 25 to 45°C. Preferably, the fermentation time is 6 to 16, even more preferably 7 to 12 hours. The fermentation temperature preferably is 30 to 40°C.

In a more preferred embodiment, the method according to the present invention is directed to produce a food base comprising soy, which comprises the steps of hydrating and heat treating de-hulled soybeans, thereby obtaining a hydrated food material based at least on soy, and conducting a solid state or semi-solid fermentation of the hydrated food material with at least one micro-organism or fungus, wherein at least the fermentation is conducted in a conical vessel.

In an embodiment of the use of a conical mixer for conducting fermentation, the conical vessel as described above is used. In a preferred embodiment, the conical vessel is a conical mixer.

In order to carry out the invention, no strict rule with respect to the fermentation vessel, the fermented food material and fermenting organisms or enzymes must be established.

Hence, the fermentation vessel may be a conical mixer. A suitable fermentation vessel is, for example, a double jacketed mixer of the type "Summix ®". The advantage with this system is that also the hydrating and heat treating steps of the food material may be easily conducted in this vessel before the fermentation step. Other suitable vessels are the Vricco-Nauta® mixers, which are worldwide acknowledged as the industrial standard mixers and of which a range of different types with different working volumes are available (up to 4000 l). However, any conical system may be suitable. For example, a vessel, which is conical and which has a downwardly converging inner wall may be suitable. Such vessels must not necessarily be "mixers" originally, but they may be constructed on purpose to carry out the fermentation according to the present invention. However, they preferably are modelled on conical mixers as those named above, for example.

If a solid state or a semi solid fermentation is to be conducted, the food material or substrate is preferably moved, mixed, stirred or agitated during or at the beginning of the fermentation process. This can be achieved by different means, for example with a rotary screw, which penetrates into the mixing vessel. For example, the mixing screw may be situated in a way that it extends through the entire mixing vessel along the inner wall from an upper opening to a bottom end, as is the case with the Vricco-Nauta® mixers, for example.

A mixing screw in the sense of the present invention may thus be called a revolving stirring system. It may, alternatively, be described as conical orbital mixing system. With such a mixing system, usually a random mixture is obtained in which the final position of the particles is determined purely by chance. For this reason, the mixers according to the invention may be described as three-dimensional convective random batch mixers. The mixing during fermentation may be described by the following three factors occurring during mixing:

The screw conveys the material upwards along the vessel wall. A screw to wall clearance avoids any tendency of the material to rotate at the same speed as the screw to prevent conveyance.

A planetary movement of an orbital arm, which is connected to the screw, causes a continuous exchange of particles between the screw and the batch material over the full length of the screw.

The remaining batch material, sinking by gravity, is subjected to a form change due to the conical shape of the vessel.

The stirring or revolving system need not necessarily be active during the whole fermentation process. It may be sufficient to mix the food material to be fermented together with the micro-organisms and/or enzymes just at the beginning and to let fermentation take place in the unstirred conical vessel. This way of carrying out the invention is even preferred if the micro-organism is a fungus that while growing on the substrate develops a mycel, and stirring would impede the growing of the micro-organism.

Likewise, the skilled person acknowledges that the revolving or stirring system described above is not the only means to obtain a homogeneous distribution of the substrate and the micro-organisms/enzymes. Accordingly, the stirring system may be absent totally and replaced by other mixing means.

The food material subjected to fermentation may be of versatile origin. For example, seeds of legumes may form part of the material. Hence, peas, beans, lenses or chickpeas may form part of the food material. Preferably, soybeans form part of the fermented food material. The food material may also comprise starchy material or material comprising carbohydrates. For example, rice, wheat, barley, oat, corn, potatoes, jerusalem artichoke, tapioca, sugar cane and the like may be added. In general, any kind of cereal or starch containing vegetable is preferred. For example, fermentation may be conducted based on 1 part by weight of soy and another part of rice or rice and other cereals. Hence, de-hulled full fat and crushed soybeans may be mixed with any kind of rice in a ratio of 1:0.1 to 0.1:1. The weight ratio of soybean to rice preferably is from 1:0.5 to 0.5:1. More preferably, it is about 1:1. Of course, soybean may also be fermented alone.

The food material to be fermented may be treated with water to gelatinize the starch and hydrate the fiber, thus allowing the fermenting units (micro-organisms, enzymes) to access the substrate. This may be done by soaking, cooking, steam treating or any other process known to the skilled person. Before fermentation, also sterilization, pasteurization, or at least a reduction of undesired germs, usually by heat treatment, may be performed. For the sake of convenience the term "pasteurization" is used to refer to any kind of process aiming at reduction of germs. For example, the food material may be treated with hot steam of a temperature of 100 - 200°C.

Preferably, the hydrating and/or pasteurization may be conducted in a way that the water content is controlled. Preferably, they are conducted in a way that the dry matter ranges indicated below are not exceeded, so that a solid or semi-solid fermentation may be directly conducted afterwards.

Preferably, the grits, groats, crushed or whole grains or seeds keep their shape during and after the hydrating or pasteurizing process, albeit being sufficiently hydrated. If the particles (groats, grits, and so forth) keep their form, the fermentation according to the present invention is facilitated and yields better results.

If soy is to be fermented, alone or together with other food material, full fat, de-hulled and crushed soybeans (45 - 75 % by weight of dry matter) may be hydrated in a suitable vessel by soaking with water for 10 to 60 minutes, for example. Preferably, soaking may be conducted for 20 - 40 minutes at 40 - 120°C, preferably 60 - 90°C. Thereafter, the food material may be sterilized at 100- 160°C for 1 - 10 minutes. By cooling to 30 - 50°C and adjusting the pH to 5 - 7 with a suitable organic acid, the food material may be prepared for the following fermentation step. For example, citric acid is a suitable organic acid. Preferably, the pH is adjusted to 5 - 6. At this moment, the dry matter content preferably lies between 40 % to 70%, more preferably between 45% to 65%.

The food material (hydrated food material) thus obtained may then be subjected to fermentation. If the food material is not yet placed in a conical mixing vessel as described above, it may be transferred to it at this stage. Fermentation may be conducted with a variety of micro-organisms, fungi and/or enzymes. According to the kind of fermentation and to the desired organoleptic properties or nutritional value of the food base, fermentation may be conducted with one or several organisms. In the case of a fermentation of soybeans, it may be conducted with a rhizopus or a lactobacillus strain. Preferably, any *Rhizopus oligosporus* strain as used for the production of tempeh is used. *Rhizopus* may be selected because it also hydrolyses fiber or because of the specific taste it produces in the end product.

If fermentation is conducted with a *Lactobacillus* strain, *Lactobacillus plantarum* may be used. Lactobacilli strains may be selected because of their capability to acidify the medium and thus conferring protection against contamination. For example, a *Lactobacillus plantarum* culture may be added to the food material described above in an amount of 0.5 to 2% by weight of the total food material. Prior to fermentation, a starter culture may be obtained by cultivating *Lactobacillus plantarum* in a commercially available MRS broth medium at 20 - 40°C for 5 - 24 hours, for example 7 - 18 hours, and keeping it at 1 - 5 °C until inoculation.

A strain may be selected because of its ability to acidify the medium or because of its probiotic properties. The skilled person is aware of the huge number of possible strains that will be suitable to accomplish this task. EP 0862863 lists a few strains that may prove useful to carry out the present invention.

In addition to one or several micro-organisms or fungi, also specific enzymes may be added according to preferences. For example, proteases, like alcalase®, neutrase® or flavourzym® may be added. Also, hemicellulases and cellulases, amylases, for example α-amylases, α-glucosidases and the like may be used. In addition, phytases, α-galactosidases and also transglutaminases may be added, if this is desired. If preferred, enzymes obtained from non-GMOs may be used (GMO = genetically modified organism). For example, endogeneous phytases from plant species, for example as naturally present in wheat flour, may be used. Usually, cellulases and hemicellulases may be used to digest fibers, proteases to improve the solubility of soybean proteins, phytase to degrade phytic acid and α-galactosidase to hydrolyze flatulent sugars.

The amount of enzymes added should be adjusted to the efficiency or activity of the enzyme and the desired intensity of the effect obtained by the enzyme.

For example, 0.4 to 1% by weight of α-amylase (Dexlo P, B 250, commercially obtainable from Gist-brocades, the Netherlands) and 0.1 to 0.25% of α-glucosidase (for example, AMG 300® obtainable from Novo Nordisk) may be added to the food material together with the micro-organism or the fungus when starting fermentation.

The fermentation duration and temperature strongly depend on the used organisms. For example, if a soy based food material based on hydrated crushed and de-hulled soybeans is fermented with a *Lactobacillus plantarum* strain, with or without addition of enzymes, fermentation may carried out at 35 to 43°C for 5 to 25 hours, preferably 7 to 12 hours.

If the same food material is to be fermented with *Rhizopus* solely or together with enzymes as proteases, phytases and galactosidase, fermentation may be carried out at 25 to 34°C for 8 to 26 hours, preferably, 10 to 24 hours, more preferably 12 to 20 hours.

Generally, fermentation takes place at a temperature from 25 to 45 °C, preferably from 28 to 43°C for 5 to 30 hours, preferably 6 to 25 hours. It is worthwhile noting that fermentation time is clearly reduced with respect to so far known fermentation of food material based on soy.

The fermentation is a solid state or a semi-solid fermentation, meaning that the dry matter content of the food material is relatively high during fermentation. For example, the food material may have a dry matter content of 20 to 80% in percent by weight. Preferably, it is between 35 to 70%, more preferably between 40 to 70%. For example, the dry matter content may be adjusted to 50 to 65%. In a preferred embodiment, the dry matter content is 45 to 60% by weight. These values may be valid also for the food material at the start of the fermentation. Since the dry matter content should not change in a way to leave the indicated ranges significantly during the fermentation, the above ranges generally are valid for the entire fermentation process and also for the food base obtained directly after having performed the fermentation.

After the time of fermentation has expired, enzymes and micro-organisms or fungi may be inactivated by a short heat treatment. For example, a treatment of 80 to 110°C for 20 seconds to 1 minute may be adequate.

Depending on the further processing of the fermentation product, the food base, a heat treatment may not even be necessary. For example, if the food base comprises fermented soy-beans, which will be later processed to soy milk, the food base will be milled and heat-treated. In such cases, the food base may just be cooled, for example at or below 4°C, until further processing is initiated.

Upon termination of fermentation in a conical vessel, the food base so obtained may be easily removed from the conical vessel by opening the bottom of the vessel, which allows the food base to exit by gravity.

If a food material, for example comprising soybean and/or rice, is treated in the manner as set out above, the nutritional quality is clearly improved, the viscosity is lowered and a food base without off-taste and bitterness may be obtained. Such a base may be used directly in any food product.

Alternatively, the food base obtained according to the method of the present invention may be further processed utilizing existing technology. For example, the food base may be further liquefied by addition of a liquid, such as water, or it may be dried and processed to a powder.

For example, the food base obtained by the process according to the invention may be further liquefied by addition of water and then milled. Thereafter, the hard parts and/or insolubles may be removed by filtration. The resulting liquid may be readily processed to a ready-to-drink beverage or concentrated by evaporation, for example, and dried, by means of any known technology (spray drying, fluidized bed drying, for example). In this way a powder will be obtained that is reconstitutable in water or other liquids, such as milk, for example. If soy beans formed at least part of the fermented food material, the powder may be used as a reconstitutable soy milk, for example.

The examples below are given by way of an illustration of the process according to the present invention and the products, which can be obtained thereby. The percentages and parts here are given by weight.

### Example 1: Fermentation of Soybeans with Lactobacillus and Enzymes

60 kg of de-hulled and de-fatted soybean grit was mixed with 28 l water into a double-jacketed reactor (Summix, type DF-18-MO, with a capacity of 175 l, commecially available from Techno G, Nijkerk, the Netherlands) equipped with a revolving system and hydrated for 15 minutes at 70°C.

Thereafter, steam (120°C) was injected and the hydrated soybean grit was cooked at 120°C at 1.3 bar for 3 minutes. After cooking, the soybeans were cooled down to 40°C. Prior to fermentation, the pH was adjusted to 5.5 by addition of citric acid. At this moment, the soy based material had a dry matter content of about 57% and the total weight of the material was 100 kg.

An inoculum of *L. plantarum* was prepared in advance in a MRS broth medium at 30°C for 16 hours and then kept at 4°C until start of fermentation.

Fermentation was started by incubating the cooked soybean grit with the inoculum (1% of inoculum by weight of soybeans). In so doing, an initial cell count of 4.2 x 10⁷ cfu was obtained.

Then, enzymes were added. In particular, 0.08 kg of cellulases and hemicellulases (Viscozym® L, 100 units/g, purchased from Novo Ferment AG) and 0.04 kg cellulases (Celluclast® 1.5L, 1500 units/g, from the same manufacturer) were added. Per kg of food material, 600 units of the Celluclast® and 80 units of Viscozym ® were present. The fermentation was continued at 40°C for 8 hours.

At the beginning of the fermentation, the substrate was gently agitated at 250 rpm for 5 minutes by the revolving system of the summix mixer to achieve even distribution of all ingredients in the food material. During fermentation, there was no agitation.

After 8 hours, a cell count of >10⁹ cfu was measured and the fermentation was stopped by cooling the fermented food material to 4°C. The fermented material (the food base) was later processed to soy milk powder, simply by milling it, removing the insolubles (hard parts) by filtration, concentrating by evaporation and, finally, drying.

Analysis of the soy food base before and after the fermentation revealed the following results (table 1):

**Table 1:**

| Effects of fermentation with Lactobacillus and enzymes on hydrated and cooked soy grits. | | | |
|---|---|---|---|
| | Unit | Before fermentation | After fermentation |
| Dry matter | % | 57.64 | 55 |
| total germs | cfu/g* | 4.2 x 10⁷ | >10⁹ |
| pH | | 5.5 | 5.17 |
| Viscosity | mPa | 80518 | 42060 |

| | | | |
|---|---|---|---|
| *cfu = colony forming units | | | |

The product obtained from the fermentation was a food base with good organoleptic properties (no beany or bitter taste) and a substantially reduced. The product can easily be further processed according to the manufacturer's desire or, alternatively, directly be applied to food products.

In conclusion, the process according to the present invention enables within a short fermentation time (8 hours) to remarkably reduce viscosity of food material based on soy and thus improve its nutritional and organoleptical properties.

### Example 2 : Fermentation of Soy and Rice with Rhizopus

A substrate for fermentation of rice and soybeans was prepared as follows: Water (48 l) was added to rice (46 kg) and de-hulled, de-fatted crushed soybeans (46 kg) in a summix reactor (same type as in example 1). The mixture was heated to 70°C for 15 minutes to allow hydration by soaking. Thereafter a cooking step involved heating the mixture to 120 °C for 3 minutes at a pressure of 1.3 bar. Then the mixture was cooled to 35 °C.

An inoculum of *Rhizopus oligosporus* (ATCC 22959) was prepared by growing spores on mycological agar at 30°C for 5 days. The sporangiospore suspension (2%) was used to inoculate a sterile FS (Soy flour) medium (3% soy flour, 1% glucose, 0.5% CSC powder). The mixture was kept under shaking at 100 rpm at 30°C for 24 hours, then homogenised and kept at 4°C until use for fermentation.

The *Rhizopus* culture (1%) was added to the substrate and mixed. The initial pH was adjusted to 5 - 6 with citric acid (25 %). Two different enzymes were added (α-amylase, 0.8 kg, Dexlo-P®, Gist-brocades, the Netherlands and α-glucosidase, 0.18 kg, AMG®, Novo Nordisk, the Netherlands). The fermentation was carried out in one step, at 30°C for 12 hours under slight agitation (250rpm). The dry matter throughout the fermentation was high (above 50%).

After 12 hours, the fermentation was stopped by chilling (4°C) after removal of the substrate by gravitation. The food base obtained was further processed to a powder as set forth in example 1.

Analysis of the soy and rice based material before and after the fermentation with *Rhizopus* and enzymes revealed the following results (table 2):

**Table 2:**

| Effects of fermentation with *Rhizopus* and enzymes on hydrated and cooked soy grits and rice. | | | |
|---|---|---|---|
| | Unit | Before fermentation | After fermentation |
| Dry matter | % | 57.1 | 53,2 |
| total germs | cfu/g | < 10 | 300 |
| pH | | 5.5 | 5.5 |
| Viscosity | mPa | 80518 | 42060 |
| Phytic acid | % (based on protein) | 3,4 | 2,9 |
| SI*, pH 6.8 | % | 21.4 | 48.9 |
| NSI** | % | 0.8 | 12.8 |
| DE*** | | 1.4 | 20 |

| | | | |
|---|---|---|---|
| *Solubility index; | | | |
| **Nitrogen solubility index; | | | |
| ***Dextrose equivalents | | | |

The taste of the food base obtained directly after fermentation was sweet and pleasant.

In summary, a food base useful for further processing or for direct application to other foods and consumption was obtained from a base comprising soy and rice by fermentation in an extremely short time in a conical vessel, in this case a conical mixer. The nutritional value of the food base was clearly improved within little time.

## Claims

1. A method of solid or semi-solid fermentation of food material, which is conducted in a conical vessel.

2. A method of reducing the viscosity of food material, wherein a solid or semi-solid fermentation is conducted in a conical vessel.

3. A method for enhancing the organoleptic and/or nutritional properties of food material, wherein a solid or semi-solid fermentation is conducted in a conical vessel.

4. The method according to any of the preceding claims, wherein the food material has a dry matter content of 35 to 75% in percent by weight at the start of the fermentation.

5. The method according to any of the preceding claims, wherein the conical vessel comprises a rotary element.

6. The method according to any of the preceding claims, wherein the conical vessel is a conical orbital mixer.

7. The method according to any of the preceding claims, wherein the food material comprises material selected form the group comprising cereals, seeds of legumes, potatoes and mixtures thereof.

8. The method according to any of the preceding claims, wherein the fermentation is conducted with at least one micro-organism selected from strains of the genus *Lactobacillus,* and *Rhizopus* and combinations thereof.

9. The method according to any of the preceding claims, wherein the fermentation is conducted with at least one enzyme selected from the group consisting of protease, hemicellulase, cellulase, amylase, α-glucosidase, phytase, galactosidase and combinations thereof.

10. Use of a conical vessel for conducting fermentation.
